# EUROPÄISCHE PATENTSCHRIFT

(11) **EP 2 457 808 B1**
(45) Veröffentlichungstag und Bekanntmachung des Hinweises auf die Patenterteilung: **30.04.2014**
(21) Anmeldenummer: 11189718.7
(22) Anmeldetag: 18.11.2011
(51) Int. Cl.: B62D 25/02, B62D 29/04

(54) **Verfahren zur herstellung einer seitenwand**
Method for manufacturing a side wall
Procédé de fabrication d'une paroi latérale

(30) Priorität: 24.11.2010 DE 102010052377
(43) Veröffentlichungstag der Anmeldung: 30.05.2012
(73) Patentinhaber: Magna Steyr Fahrzeugtechnik AG & Co KG, 8041 Graz (AT)
(72) Erfinder: Hofer, Bernhard, 8053 Graz (AT); Sebök, Balazs, 7634 PECS (HU)
(74) Vertreter: Rausch, Gabriele

(56) Entgegenhaltungen:
- EP-A2- 0 039 071
- AU-A- 2 949 771
- US-A- 5 512 233
- US-A- 5 738 747

## Beschreibung

Die Erfindung betrifft ein Verfahren zur Herstellung einer Seitenwand einer Fahrzeugkarosserie unter Verwendung zumindest eines Formpresswerkzeuges.

Weiters betrifft die Erfindung eine Seitenwand für eine Fahrzeugkarosserie.

Ein einschlägiges Formpressverfahren zur Herstellung von Teilen einer Seitenwand einer Fahrzeugkarosserie, insbesondere von Dekor und Verkleidungsteilen einer Seitenwand, ist beispielsweise aus der DE102007024530 bekannt geworden. Bei dem bekannten Verfahren wird ein eine Dekorschicht bildender Werkstoff, eine einen Träger bildende Kunststoff-Formmasse und ein duktile Material zur Bildung einer duktilen Einlage in einen geöffneten Formraum eines Formpresswerkzeugs eingelegt und/oder darin positioniert. Das Formpresswerkzeug besteht aus zumindest zwei Formteilen, einen Oberteil und einem Unterteil. Diese können auseinander und aufeinander zu bewegt werden. Zwischen Ober-und Unterteil ist der Formraum ausgebildet, im geschlossenen Zustand von Ober- und Unterteil ein Hohlraum, der durch das Auseinanderfahren von Ober- und Unterteil geöffnet wird, so dass die einzelnen Komponenten und Materialien eingelegt werde können. Beim Zufahren von Ober- und Unterteil erfolgt der formgebende Pressvorgang. Die Form der hierbei entstehenden Formteile wird bestimmt durch die Form des Formraums, diese stellt eine Negativform des Formteils dar. Nach dem Einlegen und/oder Positionieren von Werkstoff und duktilem Material wird in einem weiteren Verfahrensschritt der Formraum des Formpresswerkzeugs geschlossen. Hierbei werden der die Dekorschicht bildende Werkstoff und/oder die den Träger bildende Kunststoff-Formmasse und/oder das duktile Material zur Bildung der duktilen Einlage in die durch den Formraum vorgegebene Form gepresst. Anschliessend erstarrt die Kunststoff-Formmasse (z. B. bei thermoplastischen Kunststoff-Formmassen) oder härtet die Kunststoff-Formmasse aus (z. B. bei duroplastischen Kunststoff-Formmassen) und bildet zusammen mit dem die Dekorschicht bildenden Werkstoff und dem duktilen Material zur Bildung der duktilen Einlage das herzustellende Formteil.

Ein weiteres gattungsgemässes Dokument ist zum Beispiel US 5 738 747.

Nachteilig an dem bekannten Verfahren ist hinsichtlich der Fertigung einer kompletten Seitenwand, dass nach der Fertigstellung des Seitenwandbestandteils dieser üblicherweise in weiteren relativ aufwendigen Verarbeitungsschritten mit einer Vielzahl anderen Teilen zu einer Seitenwand weiterverarbeitet werden muss. Dabei müssen die Teile exakt positioniert werden und ein Zugang für die Verbindungstechnik gegeben sein, was nur teilweise oder mit einem sehr hohen Aufwand gelöst werden kann. Die Folge sind hohe Kosten bzw. lange Toleranzketten und dadurch schlechte Masshaltigkeit. Auch in der Verbindungstechnik müssen bei herkömmlichen Herstellungsverfahren immer wieder Kompromisse mit negativen Auswirkungen, wie Korrosion, verminderte Steifigkeit, zusätzliche Fügeverfahren, Gefährdung der Außenhautoberflächenqualität, etc., eingegangen werden. Speziell der Leichtbau mit Materialmix erhöht den Schwierigkeitsgrad der Herstellung erheblich beispielsweise durch Kontaktkorrosion und viele verschieden zum Einsatz kommende Fügeverfahren.

Es ist daher eine Aufgabe der Erfindung, die Herstellung einer Seitenwand bzw. den Aufbau einer Seitenwand einer Fahrzeugkarosserie zu vereinfachen und dadurch kostengünstiger sowie effizienter zu gestalten.

Diese Aufgabe wird mit einem Verfahren der eingangs genannten Art erfindungsgemäß dadurch gelöst, dass die Seitenwand aus zwei Kunststoffschalen und einer dazwischen liegenden, verstärkenden Metallstruktur aufgebaut wird, wobei eine Formgebung der ersten Kunststoffschale mittels eines ersten und eines zweiten Formteils und eine Formgebung der zweiten Kunststoffschale mittels eines dritten und eines vierten Formteils erfolgt, eine Beschichtung in ein fünftes Formteil eingefüllt wird, wobei das vierte Formteil entfernt und die zweite Kunststoffschale an dem dritten Formteil verbleibt und durch Zusammenfügen mit dem fünften Formteil mit der Beschichtung verbunden wird, woraufhin das dritte Formteil von der zweiten Kunststoffschale entfernt wird, wobei die zweite Kunststoffschale an dem fünften Formteil verbleibt und die Metallstruktur mit der zweiten Kunststoffschale verklebt wird, woraufhin die erste Kunststoffschale, welche sich nach Entfernen des zweiten Formteils noch in dem ersten Formteil befindet, durch Zusammenfügen des fünften und des ersten Formteils nach Aufbringen einer Klebstoffschicht mit der Metallstruktur verklebt wird.

Es ist ein Verdienst der Erfindung, die Herstellung einer Seitenwand wesentlich zu vereinfachen und auch die Masshaltigkeit wesentlich zu verbessern. Die verwendeten Formteile (Werkzeugteile) unterliegen außerdem einer Mehrfachverwendung während des Herstellungsprozesses, wodurch es zu einer erheblichen Kostenreduktion gegenüber herkömmlichen Herstellungsverfahren kommt. Da die Kunststoffteile in ihren Herstellwerkzeugen verbleibend, sind diese während des gesamten Herstellungsprozess optimal positioniert. Außer zur Fertigung der Metallstruktur, beispielsweise eines Stahlrahmens, werden somit für den gesamten Herstellungsprozess keine zusätzlichen Vorrichtungen benötigt.

Eine vorteilhafte Variante der Erfindung sieht vor, dass die Beschichtung eine äußere Deckschicht, insbesondere Decklackschicht, aufweist und in das fünfte Formteil eingebracht wird. Auf diese Weise lässt sich schon während des Herstellungsprozesses auf sehr einfache Weise der Decklack auf die äußere Kunststoffschale aufbringen, wodurch ein nachträglicher Decklackprozess der Seitenwand entfallen kann. In diesem Zusammenhang hat es sich als besonders günstig herausgestellt, wenn nach dem Einbringen der Deckschicht in das fünfte Formteil ein Kunststoffschaum, insbesondere ein PU-Schaum in das fünfte Formteil eingespritzt wird, da durch den Kunststoffschaum eine gute Anbindung der Deckschicht an die äußere Kunststoffschale erreicht wird.

Eine besonders vorteilhafte Variante der Erfindung sieht vor, dass die erste und die zweite Kunststoffschale je aus einem endlosfaserverstärktem Thermoplast geformt werden. Diese Variante der Erfindung zeichnet sich vor allem dadurch aus, dass infolge der Verwendung von endlosfaserverstärkten Kunststoffplatten sich auf einfache Weise eine einteilige Ausführung der Kunststoffschalen erreichen lässt. Diese Ausführungsvariante stellt einen wesentlichen Fortschritt im Hinblick auf bisher übliche mehrteilige Aufbauten der äußeren Seitenwandschalen dar.

In Hinblick auf die Prozessoptimierung und Verwendung möglichst weniger Werkzeuge bzw. Formteile hat es sich als besonders günstig erwiesen, dass als erstes und drittes Formteil je ein Formkern und als zweites, viertes und fünftes Formteil je eine Matrize verwendet werden.

Um den Verschleiß der zur Durchführung des erfindungsgemäßen Verfahrens benötigten Formen möglichst gering zu halten, können als zweites, viertes und fünftes Formteil Dauerformen aus Aluminium oder Stahl verwendet werden.

Weiters hat es sich als äußerst vorteilhaft herausgestellt, wenn als zweites Formteil eine Druckmembran verwendet wird. Durch diese Variante der Erfindung kann unter anderem der Herstellungsprozess dadurch weiter optimiert werden, dass zur Beaufschlagung mit Druck heiße Luft verwendet werden kann, was vor allem hinsichtlich des Umformungsprozesses des endlosfaserverstärkten Thermoplasten in die gewünschte Kunststoffschalenform von Vorteil ist.

Die oben genannte Aufgabe kann auch mit einer Seitenwand der eingangs genannten Art erfindungsgemäß dadurch gelöst werden, dass sie nach dem erfindungsgemäßen Verfahren hergestellt ist und aus zwei Kunststoffschalen und einer dazwischen befindlichen inneren Metallstruktur aufgebaut ist.

Ein geringes Gewicht der Seitenwand lässt sich dadurch erzielen, dass die Kunststoffschalen je aus endlosfaserverstärktem Thermoplast gebildet sind.

Die Erfindung samt weiteren Vorteilen wird im Folgenden anhand einiger nicht einschränkender Ausführungsbeispiele näher erläutert, welche in den Zeichnungen dargestellt sind. In diesen zeigen schematisch:
Fig. 1 Eine Explosionsdarstellung einer erfindungsgemäßen Seitenwand;
Fig. 2 ein bei dem erfindungsgemäßen Verfahren verwendetes Formpresswerkzeug mit einem ersten und einem zweiten Formteil zur Herstellung der ersten Kunststoffschale;
Fig. 3 ein bei dem erfindungsgemäßen Verfahren verwendetes Formpresswerkzeug mit einem dritten und einem vierten Formteil zur Herstellung der zweiten Kunststoffschale;
Fig. 4 ein bei dem erfindungsgemäßen Verfahren verwendetes Formpresswerkzeug, welches das dritten Formteil aus Fig. 3 und einem fünften Formteil zur Beschichtung der zweiten Kunststoffschale aufweist und
Fig. 5 ein bei dem erfindungsgemäßen Verfahren verwendetes Formpresswerkzeug, welches das erste Formwerkzeug aus Fig.2 und das fünfte Formwerkzeug aus Fig. 4 aufweist, um die erste und die zweite Kunststoffschale mit einer dazwischen angeordneten Metallstruktur zu verbinden.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters sind die Figuren übergreifend beschrieben.

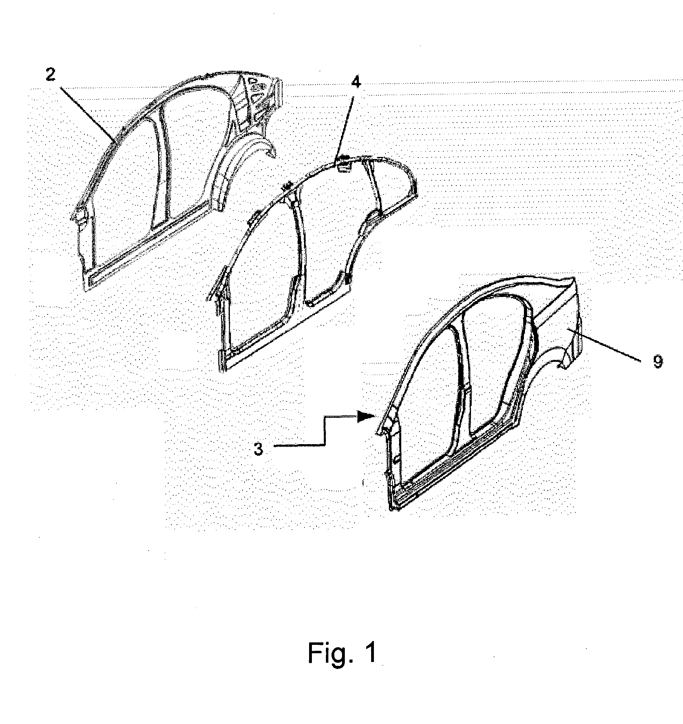

Gemäß Fig. 1 weist eine erfindungsgemäße Seitenwand 1 zwei Kunststoffschalen 2, 3 und eine zwischen den Kunststoffschalen 2 und 3 befindliche Metallstruktur 4 auf. Die Kunststoffschalen 2 und 3 sind bevorzugterweise aus endlosfaserverstärktem Thermoplast hergestellt. Die Metallstruktur 4 kann beispielsweise als Stahlrahmen aus gebogenen Profilen und kleineren Blechteilen ausgeführt sein. Natürlich kann die Metallstruktur 4 auch aus Aluminium oder anderen geeigneten Metallen bzw. Legierungen gefertigt sein.

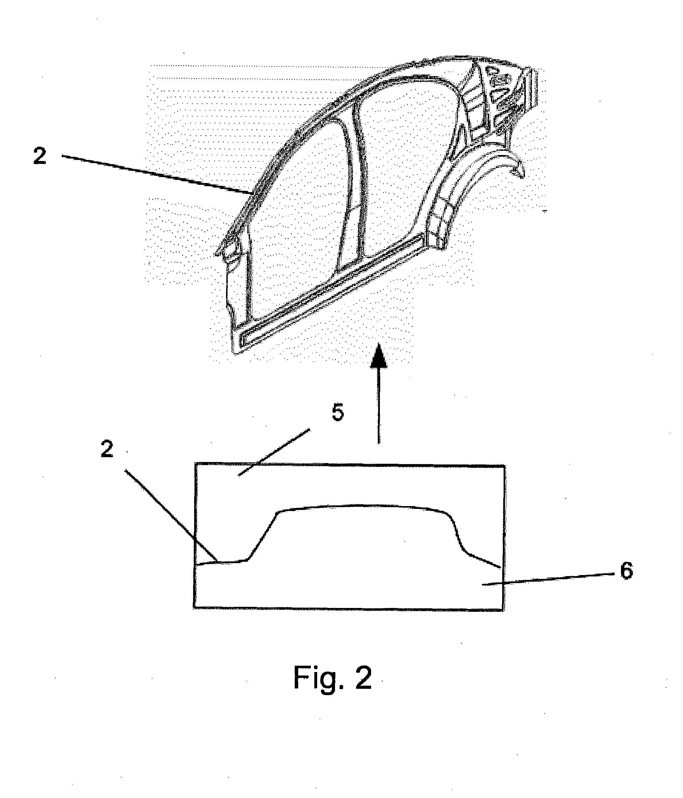

Wie in Fig. 2 dargestellt, erfolgt gemäß dem erfindungsgemäßen Verfahren eine Formgebung der ersten Kunststoffschale 2 mittels eines ersten Formteils 5 und eines zweiten Formteils 6 eines Formpresswerkzeuges. Hierzu kann der in das Formpresswerkzeug eingelegte Kunststoff, bevorzugterweise endlosfaserverstärktes Thermoplast, erwärmt und, wie eingangs bei der Diskussion des Stands der Technik erwähnt, durch Schließen der beiden Formteile 5, 6 in die gewünschte Form gebracht werden. Nachfolgend kann eine abschließende Abkühlungsphase vorgesehen sein. Derartige Umformungsprozesse sind dem Fachmann in großer Zahl bekannt, weshalb auf diese Prozesse an dieser Stelle nicht im näheren Detail eingegangen werden soll.

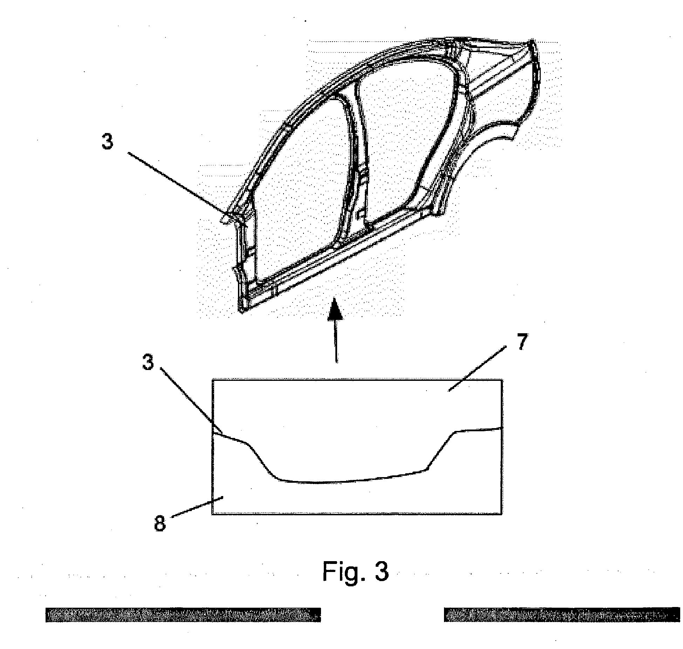

Fig. 3 zeigt die Herstellung der zweiten Kunststoffschale 3. Die Formgebung der zweiten Kunststoffschale 3 erfolgt mittels eines dritten und eines vierten Formteils 7, 8, wobei der Prozess der Formung der zweiten Kunststoffschale 3, dem der ersten Kunststoffschale 2 entspricht.

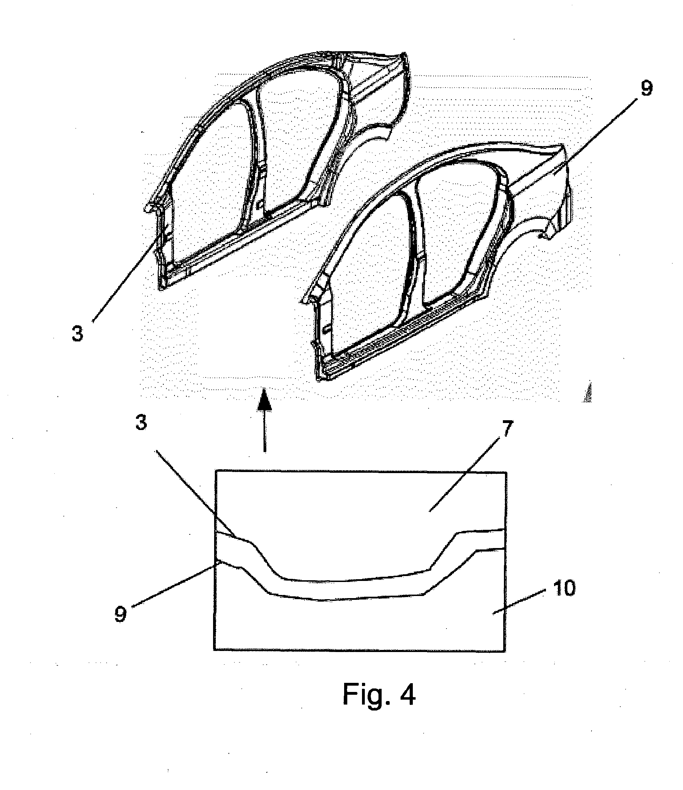

Gemäß Fig. 4 wird eine Beschichtung 9, beispielsweise in Form eines Kunststoffschaums, in ein fünftes Formteil 10 eingebracht. Das vierte Formteil 8 wird entfernt und die zweite Kunststoffschale 3 verbleibt an dem dritten Formteil 7. Durch Zusammenfügen des dritten Formteils 7 mit dem fünften Formteil 10 wird die zweite Kunststoffschale 3 mit der Beschichtung 9 verbunden. An dieser Stelle sei darauf hingewiesen, dass die Beschichtung 9 auch nach Zusammenfügen des dritten Formteils 7 mit dem fünften Formteil 10 in eine zwischen dem fünften Formteil 10 und der zweiten Kunststoffschale 3 gebildete Kavität eingespritzt werden kann. Bevorzugterweise weist die Beschichtung 9 zusätzlich eine äußere Deckschicht, insbesondere Decklackschicht, auf. Die Deckschicht kann beispielsweise durch eine in den fünften Formteil 10 eingelegte Farbfolie gebildet werden, wobei der Hohlraum zwischen zweiter Kunststoffschale 3 und der Farbfolie mit dem oben erwähnten Kunststoffschaum, beispielsweise einem PU-Schaum, ausgespritzt werden kann.

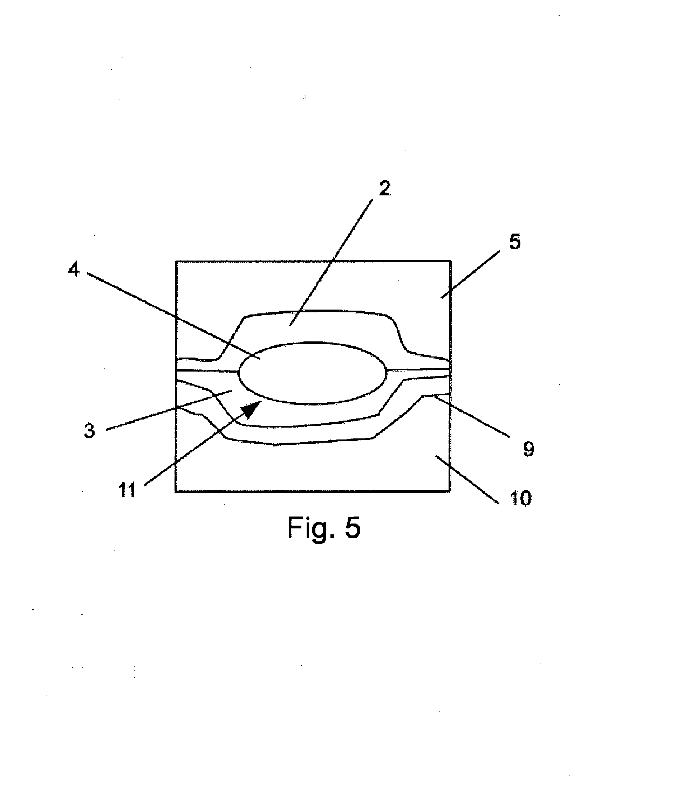

Wie aus Fig. 5 ersichtlich wird das dritte Formteil 7 von der zweiten Kunststoffschale 3 nach Abschluss des Formgebungsprozesses entfernt, wobei die zweite Kunststoffschale 3 an dem fünften Formteil 10 verbleibt. Die Metallstruktur 4 wird sodann mit der zweiten Kunststoffschale 3 verklebt. Die erste Kunststoffschale 2, welche sich nach Entfernen des zweiten Formteils 6 noch in dem ersten Formteil 5 befindet, wird durch Zusammenfügen des fünften 10 und des ersten Formteils 5 nach Aufbringen einer Klebstoffschicht 11 ebenfalls mit der Metallstruktur 4 und der Kuststoffschale 3 zu der Seitenwand 1 verklebt.

Abschließend sei erwähnt, dass günstigerweise als erstes und drittes Formteil 5, 7 je ein Formkern und als zweites, viertes und fünftes Formteil 6, 8, 10 je eine Matrize verwendet werden. Weiters können die Formteile 6, 8, 10 als Dauerformen aus Aluminium oder Stahl ausgebildet sein. Als zweites Formteil 6 kann jedoch vorteilhafterweise eine in einem Metallrahmen eingespannte, und mit Druckluft beaufschlagbare Druckmembran zum Einsatz kommen.

### Bezugszeichenliste

- 1: Seitenwand
- 2: Kunststoffschale
- 3: Kunststoffschale
- 4: Metallstruktur
- 5: erster Formteil
- 6: zweiter Formteil
- 7: dritter Formteil
- 8: vierter Formteil
- 9: Beschichtung
- 10: fünfter Formteil
- 11: Klebstoffschicht

## Patentansprüche

1. Verfahren zur Herstellung einer Seitenwand (1) einer Fahrzeugkarosserie unter Verwendung zumindest eines Formpresswerkzeuges, **dadurch gekennzeichnet, dass** die Seitenwand (1) aus zwei Kunststoffschalen (2, 3) und einer dazwischen liegenden, verstärkenden Metallstruktur (4) aufgebaut wird, wobei eine Formgebung der ersten Kunststoffschale (2) mittels eines ersten und eines zweiten Formteils (5, 6) und eine Formgebung der zweiten Kunststoffschale (3) mittels eines dritten und eines vierten Formteils (7, 8) erfolgt, eine Beschichtung (9) in ein fünftes Formteil (10) eingebracht wird, wobei das vierte Formteil (8) entfernt und die zweite Kunststoffschale (3) an dem dritten Formteil (7) verbleibt und durch Zusammenfügen mit dem fünften Formteil (10) mit der Beschichtung (9) verbunden wird, das dritte Formteil (7) von der zweiten Kunststoffschale (3) entfernt wird, wobei die zweite Kunststoffschale (3) an dem fünften Formteil (10) verbleibt und die Metallstruktur (4) mit der zweiten Kunststoffschale (3) verklebt wird, woraufhin die erste Kunststoffschale (2), welche sich nach Entfernen des zweiten Formteils (6) noch in dem ersten Formteil (5) befindet, durch Zusammenfügen des fünften (10) und des ersten Formteils (5) nach Aufbringen einer Klebstoffschicht (11) mit der Metallstruktur (4) und dem Kunststoffschale (3) verklebt wird.

2. Verfahren nach Anspruch 1, **dadurch gekennzeichnet, dass** die Beschichtung (9) eine äußere Deckschicht, insbesondere Decklackschicht, aufweist und in das fünfte Formteil (10) eingebracht wird.

3. Verfahren nach Anspruch 2, **dadurch gekennzeichnet, dass** nach einem Einbringen der Deckschicht in das fünfte Formteil (10) ein Kunststoffschaum, insbesondere ein PU-Schaum in das fünfte Formteil (10) eingespritzt wird.

4. Verfahren nach einem der Ansprüche 1 bis 3, **dadurch gekennzeichnet, dass** die erste und die zweite Kunststoffschale (2, 3) je aus einem endlosfaserverstärktem Thermoplast geformt werden.

5. Verfahren nach einem der Ansprüche 1 bis 4, **dadurch gekennzeichnet, dass** als erstes und drittes Formteil (5, 7) je ein Formkern und als zweites, viertes und fünftes Formteil (6, 8, 10) je eine Matrize verwendet werden.

6. Verfahren nach Anspruch 5, **dadurch gekennzeichnet, dass** als zweites, viertes und fünftes Formteil (6, 8, 10) Dauerformen aus Aluminium oder Stahl verwendet werden.

7. Verfahren nach Anspruch 5 oder 6, **dadurch gekennzeichnet, dass** als zweites Formteil (6) eine Druckmembran verwendet wird.

8. Seitenwand (1) für eine Fahrzeugkarosserie, **dadurch gekennzeichnet, dass** sie nach einem Verfahren nach einem der Ansprüche 1 bis 6 hergestellt ist und aus zwei Kunststoffschalen (2, 3) und einer dazwischen befindlichen inneren Metallstruktur (4) aufgebaut ist.

9. Seitenwand nach Anspruch 7, **dadurch gekennzeichnet, dass**, die Kunststoffschalen (2, 3) je aus einem endlosfaserverstärktem Thermoplast gebildet sind.

## Claims

1. Method for manufacturing a side wall (1) of a vehicle body using at least one compression mould, **characterized in that** the side wall (1) is made up of two plastic shells (2, 3) and a reinforcing metal structure (4) lying in between, wherein a shaping of the first plastic shell (2) is performed by means of a first and a second mould part (5, 6) and a shaping of the second plastic shell (3) is performed by means of a third and a fourth mould part (7, 8), a coating (9) is introduced into a fifth mould part (10), wherein the fourth mould part (8) is removed and the second plastic shell (3) remains on the third mould part (7) and is bonded to the coating (9) by joining together with the fifth mould part (10), the third mould part (7) is removed from the second plastic shell (3), wherein the second plastic shell (3) remains on the fifth mould part (10) and the metal structure (4) is adhesively bonded to the second plastic shell (3), whereupon, after application of a layer of adhesive (11), the first plastic shell (2), which is still in the first mould part (5) after removal of the second mould part (6), is adhesively bonded to the metal structure (4) and the plastic shell (3) by joining together of the fifth mould part (10) and the first mould part (5).

2. Method according to Claim 1, **characterized in that** the coating (9) has an outer top layer, in particular a top layer of paint, and is introduced into the fifth mould part (10).

3. Method according to Claim 2, **characterized in that**, after the introduction of the top layer into the fifth mould part (10), a foam plastic, in particular a PU foam, is injected into the fifth mould part (10).

4. Method according to one of Claims 1 to 3, **characterized in that** the first and second plastic shells (2, 3) are each formed from a thermoplastic reinforced with continuous fibres.

5. Method according to one of Claims 1 to 4, **characterized in that** a mould core is respectively used as the first and third mould parts (5, 7) and a cavity plate is respectively used as the second, fourth and fifth mould parts (6, 8, 10).

6. Method according to Claim 5, **characterized in that** permanent moulds of aluminium or steel are used as the second, fourth and fifth mould parts (6, 8, 10).

7. Method according to Claim 5 or 6, **characterized in that** a pressure membrane is used as the second mould part (6).

8. Side wall (1) for a vehicle body, **characterized in that** it is manufactured by a method according to one of Claims 1 to 6 and is made up of two plastic shells (2, 3) and an inner metal structure (4) located in between.

9. Side wall according to Claim 8, **characterized in that** the plastic shells (2, 3) are each formed from a thermoplastic reinforced with continuous fibres.

## Revendications

1. Procédé de fabrication d'une paroi latérale (1) d'une carrosserie de véhicule en utilisant au moins un outil de formage par compression, **caractérisé en ce que** la paroi latérale (1) est fabriquée à partir de deux coques en plastique (2, 3) et d'une structure métallique (4) de renforcement placée entre elles, un formage de la première coque en plastique (2) s'effectuant au moyen d'une première et d'une deuxième partie de moule (5, 6) et un formage de la deuxième coque en plastique (3) s'effectuant au moyen d'une troisième et d'une quatrième partie de moule (7, 8), un revêtement (9) étant introduit dans une cinquième partie de moule (10), la quatrième partie de moule (8) étant enlevée et la deuxième coque en plastique (3) restant contre la troisième partie de moule (7) et par assemblage avec la cinquième partie de moule (10) étant assemblée au revêtement (9), la troisième partie de moule (7) étant enlevée de la deuxième coque en plastique (3), la deuxième coque en plastique (3) restant contre la cinquième partie de moule (10) et la structure métallique (4) étant collée à la deuxième coque en plastique (3), puis la première coque en plastique (2) qui se trouve encore dans la première partie de moule (5) après l'enlèvement de la deuxième partie de moule (6) étant collée par assemblage de la cinquième (10) et de la première (5) partie de moule après l'application d'une couche d'adhésif (11) à la structure métallique (4) et à la coque en plastique (3).

2. Procédé selon la revendication 1, **caractérisé en ce que** le revêtement (9) présente une couche de revêtement extérieure, en particulier une couche de vernis de finition, et est introduit dans la cinquième partie de moule (10).

3. Procédé selon la revendication 2, **caractérisé en ce qu'**après une introduction de la couche de revêtement dans la cinquième partie de moule (10), une mousse en plastique, en particulier une mousse de PU, est injectée dans la cinquième partie de moule (10).

4. Procédé selon l'une quelconque des revendications 1 à 3, **caractérisé en ce que** la première et la deuxième coque en plastique (2, 3) sont chacune formées à partir d'un matériau thermoplastique renforcé par des fibres sans fin.

5. Procédé selon l'une quelconque des revendications 1 à 4, **caractérisé en ce que** l' on utilise en tant que première et troisième partie de moule (5, 7) à chaque fois un noyau de moule et en tant que deuxième, quatrième et cinquième partie de moule (6, 8, 10) à chaque fois une matrice.

6. Procédé selon la revendication 5, **caractérisé en ce que** l'on utilise en tant que deuxième, quatrième et cinquième partie de moule (6, 8, 10) des moules durables en aluminium ou en acier.

7. Procédé selon la revendication 5 ou 6, **caractérisé en ce que** l'on utilise en tant que deuxième partie de moule (6) une membrane de pression.

8. Paroi latérale (1) pour une carrosserie de véhicule, **caractérisée en ce qu'**elle est fabriquée selon un procédé selon l'une quelconque des revendications 1 à 6, et est fabriquée à partir de deux coques en plastique (2, 3) et d'une structure métallique intérieure (4) placée entre elles.

9. Paroi latérale selon la revendication 8, **caractérisée en ce que** les coques en plastique (2, 3) sont formées chacune d'un matériau thermoplastique renforcé par des fibres sans fin.
